# EUROPEAN PATENT APPLICATION

(11) **EP 4 692 736 A1**
(43) Date of publication of application: **11.02.2026**
(21) Application number: 24780353.9
(22) Date of filing: 26.03.2024
(51) Int. Cl.: G01F 1/684, G01N 25/18

(54) **PHYSICAL PROPERTY VALUE SENSOR, FLOW SENSOR, PHYSICAL PROPERTY VALUE DETECTION METHOD, AND FLUID DETECTION METHOD**

(30) Priority: 28.03.2023 JP 2023051492
(71) Applicant: Mitsumi Electric Co., Ltd., Tama-Shi, Tokyo 206-8567 (JP)
(72) Inventor: SUZUKI, Satoshi, Tama-shi, Tokyo 206-8567 (JP)
(74) Representative: Regimbeau
(86) International application number: PCT/JP2024/012033
(87) International publication number: WO 2024/204245

(57) **Abstract**

A physical property value sensor capable of easily reducing dependence of a flow rate detection value on fluid properties is provided.

A physical property value sensor (1) includes a first heater (11) elongated longitudinally in a flow direction (323) of a fluid, and a plurality of temperature sensors (12) aligned at respective positions with respect to the first heater (11) in a direction orthogonal to a longitudinal direction of the first heater (11).

## Description

### TECHNICAL FIELD

The present invention relates to a physical property value sensor, a flow sensor, a physical property value detection method, and a fluid detection method.

### BACKGROUND ART

A flow sensor for detecting a flow rate of a fluid such as air is known. A flow sensor is used for controlling a flow rate of air in an air-conditioning device or for controlling a flow rate of air in an automobile engine.

Disclosed is a flow sensor that corrects a flow rate detection value based on fluid property values detected by a physical property value detector in order to reduce dependence of flow rate detection values on fluid properties (see, e.g., Patent Documents 1 and 2).

### RELATED ART DOCUMENTS

### PATENT DOCUMENT

Patent Document 1: Japanese Patent No. 6493235
Patent Document 2: U.S. Patent No. 8,408,050

### SUMMARY OF THE INVENTION

### PROBLEMS TO BE SOLVED BY THE INVENTION

However, the flow sensor described in Patent Document 1 includes a fluid flow path for detecting a physical property value, which is provided separately from a fluid flow path for detecting a physical property value. This configuration is intended to restrict the flow rate of a fluid to a range measurable by a fluid property value sensor, for example, a physical property value detector. As a result, the overall structure of the flow sensor may be complex. In the flow sensor described in Patent Document 2, correction of dependence of a detected fluid property value on flow velocity is performed using a lookup table. As a result, the processing required may become complex.

An objective of the present invention is to provide a physical property value sensor, a flow sensor, a physical property value detection method, and a fluid detection method, all of which are capable of easily reducing dependence of flow rate detection values on fluid properties.

### SOLUTION TO THE PROBLEM

A physical property value sensor (1) includes a first heater (11) elongated longitudinally in a flow direction (323) of a fluid, and a plurality of temperature sensors (12) aligned at respective positions with respect to the first heater (11) in a direction orthogonal to a longitudinal direction of the first heater (11).

The above reference numerals in parentheses are provided for ease of understanding and are only examples, and are not limited to the embodiments illustrated in the drawings.

### EFFECTS OF THE INVENTION

According to the present disclosure, a physical property value sensor, a flow sensor, a physical property value detection method, and a fluid detection method, all of which are capable of easily reducing dependence of flow rate detection values on fluid properties, can be provided.

### BRIEF DESCRIPTION OF THE DRAWINGS

[FIG. 1] FIG. 1 is a perspective view schematically illustrating an example of a flow sensor according to an embodiment.
[FIG. 2] FIG. 2 is a schematic cross-sectional diagram of line II-II in FIG. 1.
[FIG. 3] FIG. 3 is a bottom view schematically illustrating a secondary flow path of the flow sensor according to the embodiment.
[FIG. 4] FIG. 4 is a top view schematically illustrating a configuration example of a fluid property value sensor according to the embodiment.
[FIG. 5] FIG. 5 is a schematic cross-sectional diagram of line V-V in FIG. 4.
[FIG. 6] FIG. 6 is a schematic cross-sectional diagram of line VI-VI in FIG. 4.
[FIG. 7] FIG. 7 is a top view schematically illustrating a configuration example of a fluid property value detector according to the embodiment.
[FIG. 8] FIG. 8 is a diagram illustrating an example of a hardware configuration of the flow sensor according to the embodiment.
[FIG. 9] FIG. 9 is a graph illustrating a temperature distribution viewed from downstream in a flow direction and an example of a detected temperature.
[FIG. 10] FIG. 10 is a graph illustrating a temperature distribution viewed from the side orthogonal to a flow direction and an example of a detected temperature.
[FIG. 11] FIG. 11 is a graph explaining flow velocity dependence of a temperature detection value.
[FIG. 12] FIG. 12 is a graph illustrating an example of a temperature difference value according to the embodiment.
[FIG. 13] FIG. 13 is a graph illustrating an example of property value information of fluids having different physical property values according to the embodiment.
[FIG. 14] FIG. 14 is a graph illustrating an example of a relationship between the physical property value information and the physical property values according to the embodiment.
[FIG. 15] FIG. 15 is a graph illustrating a relationship between an uncorrected flow rate and flow rate information.
[FIG. 16] FIG. 16 is a graph illustrating a relationship between a corrected flow rate and flow rate information according to the embodiment.
[FIG. 17] FIG. 17 is a diagram illustrating an example of a hardware configuration of the fluid property value sensor according to the embodiment.
[FIG. 18] FIG. 18 is a top view schematically illustrating a fluid property value sensor according to a first modified example.
[FIG. 19] FIG. 19 is a top view schematically illustrating a fluid property value sensor according to a second modified example.
[FIG. 20] FIG. 20 is a top view schematically illustrating a fluid property value sensor according to a third modified example.
[FIG. 21] FIG. 21 is a top view schematically illustrating a fluid property value sensor according to a fourth modified example.
[FIG. 22] FIG. 22 is a diagram explaining illustrating an operation of the fluid property value sensor according to the fourth modified example.
[FIG. 23] FIG. 23 is a top view schematically illustrating a fluid property value sensor according to a fifth modified example.
[FIG. 24] FIG. 24 is a graph illustrating a temperature distribution viewed from downstream in a flow direction in FIG. 23 and an example of a detected temperature.
[FIG. 25] FIG. 25 is a top view schematically illustrating a flow sensor according to a sixth modified example.

### DESCRIPTION OF EMBODIMENTS

Hereinafter, embodiments for carrying out the invention will be described with reference to the drawings. In the drawings, the same components are denoted by the same reference numerals, and redundant description may be omitted.

In each of the drawings, orthogonal coordinates having the X-axis, the Y-axis, and the Z-axis are used as directional expressions. The X-axis, the Y-axis, and the Z-axis are substantially orthogonal to each other. The Z-direction along the Z-axis indicates the direction along which a fluid as a target for detection performed by a physical property value sensor and a flow sensor according to the embodiment flows through a primary flow path.

The direction in which the X axis arrow points is denoted as "+X direction" or "+X side", and the direction opposite to the +X direction is denoted as "-X direction" or "-X side". The direction in which the Y axis arrow points is denoted as "+Y direction" or "+Y side", and the direction opposite to the "+Y direction" is denoted as "-Y direction" or "-Y side". The direction in which the Z axis arrow points is denoted as "+Z direction" or "+Z side", and the direction opposite to the +Z direction is denoted as "-Z direction" or "-Z side". In this specification, a fluid as a target for detection flows in the +Z direction.

In this specification, the embodiment is described using a fluid property value sensor for detecting fluid property values as an example of a physical property value sensor. However, a physical property value sensor is not limited to a fluid property value sensor and can be applied to various applications for detecting physical property values of various targets. In this specification and the claims, the term "along the direction" refers to two axes or directions being parallel within a tolerance of ±10 degrees or less. The +Y side is referred to as "up" or "upper", and the -Y side is referred to as "down" or "lower". However, these expressions describing directions do not limit the directions described in the embodiment. The orientation of the fluid property value sensor and the flow sensor in use can be freely chosen.

### [Embodiment]

### <Example of Overall Configuration of Flow Sensor 100>

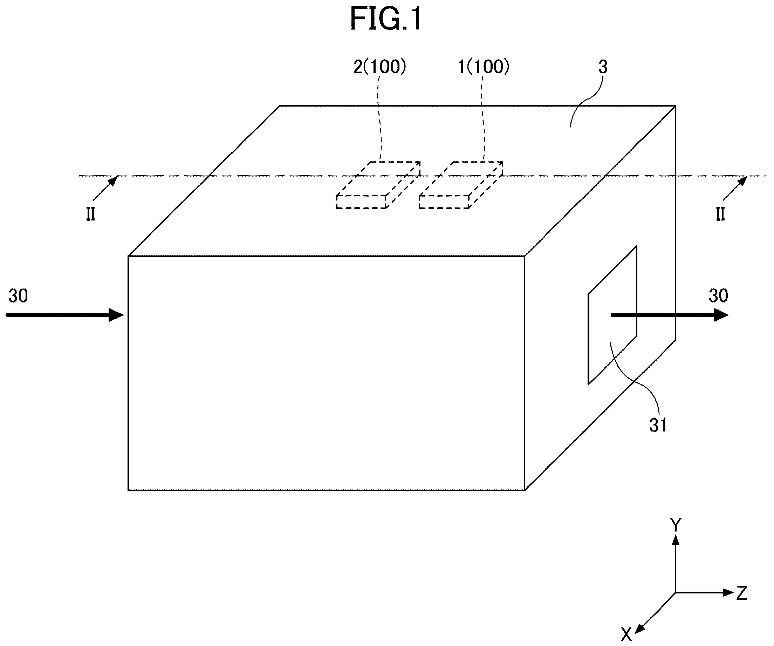

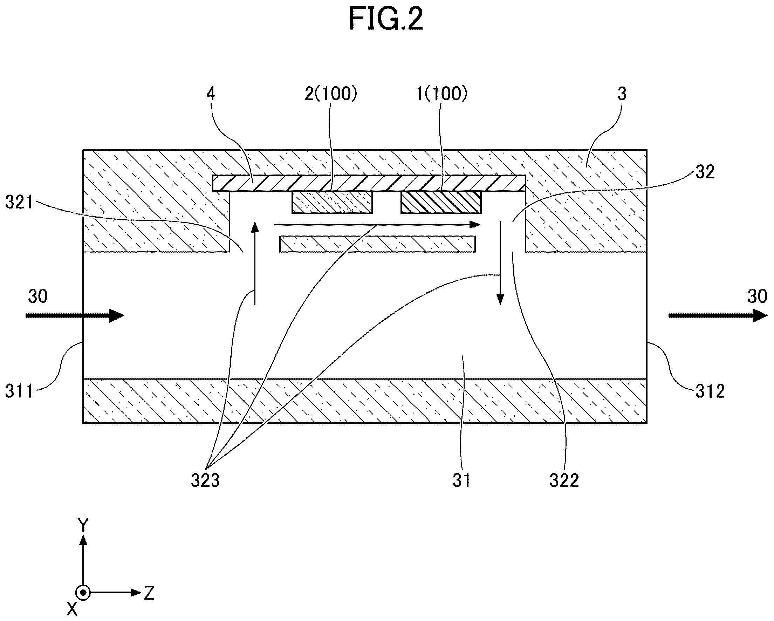

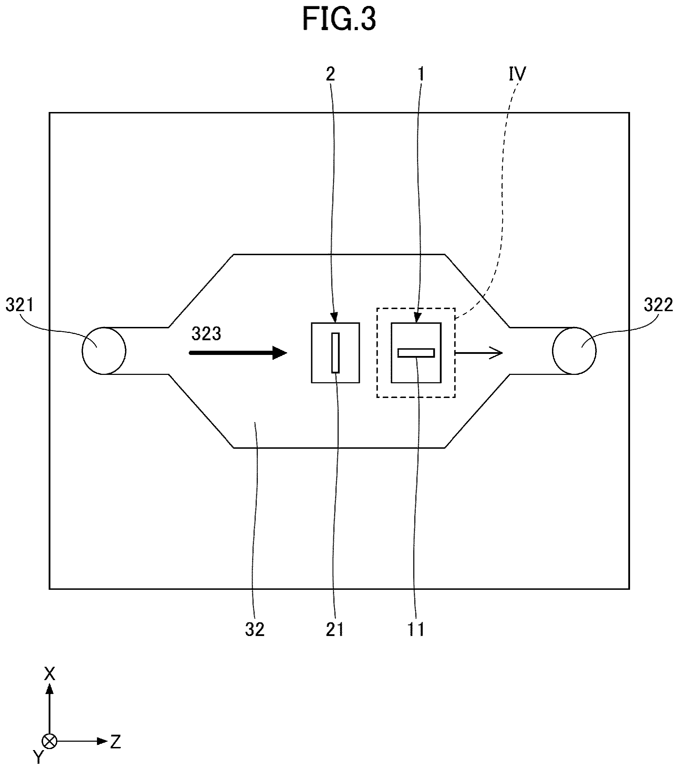

The configuration of a flow sensor 100 according to the embodiment will be described with reference to FIGS. 1 through 3. FIG. 1 is a perspective view schematically illustrating an example of the flow sensor 100. FIG. 2 is a schematic cross-sectional diagram of line II-II in FIG. 1. FIG. 3 is a bottom view schematically illustrating a secondary flow path 32 of the flow sensor 100.

As illustrated in FIGS. 1 through 3, the flow sensor 100 includes a fluid property value sensor 1 and a flow rate detector 2. The flow sensor 100 detects a flow rate of a fluid, such as air. Based on information regarding physical property values detected by the fluid property value sensor 1, the flow sensor 100 corrects a flow rate detection value detected by the flow rate detector 2, thereby reducing dependence of flow rate detection values on fluid properties. Particularly, in the present embodiment, dependence of flow rate detection values on fluid properties can be easily reduced. Herein, the term "fluid property values" means a value suggesting information regarding the composition of a fluid. Fluid property values include thermal conductivity and thermal diffusivity of a fluid.

As illustrated in FIGS. 1 through 2, the fluid property value sensor 1 and the flow rate detector 2 are arranged inside a housing 3 of the flow sensor 100. The housing 3 is a substantially rectangular parallelepiped member containing a material, such as resin. However, the shape of the housing 3 is not limited to a substantially rectangular parallelepiped and can be appropriately changed according to the application of the flow sensor 100. The housing 3 includes a primary flow path 31 and a secondary flow path 32. The secondary flow path 32 is a flow path branched from the primary flow path 31.

A fluid that is a target for detection (hereinafter simply referred to as "the fluid") enters the flow sensor 100 from the outside of the flow sensor 100 through an inlet opening 311 of the primary flow path 31. The fluid flows through the primary flow path 31 in the mainstream direction 30, and then is discharged to the outside of the flow sensor 100 through an outlet opening 312. As illustrated in FIGS. 2 through 3, part of the fluid flowing through the primary flow path 31 enters the secondary flow path 32 through a supply port 321, flows through the secondary flow path 32 in a flow direction 323, and then is discharged from the secondary flow path 32 through a discharge port 322. The fluid discharged from the secondary flow path 32 joins the primary flow path 31.

As illustrated in FIG. 2, the fluid property value sensor 1 and the flow rate detector 2 are mounted on the lower surface (-Y side surface) of a substrate 4. As the upper surface (+Y side surface) of the substrate 4 is fixed to the upper inner wall surface of the secondary flow path 32, the fluid property value sensor 1 and the flow rate detector 2 are therefore arranged inside the housing 3. As illustrated in FIG. 3, the secondary flow path 32 has a wide flow path between the supply port 321 and the discharge port 322. The fluid property value sensor 1 and the flow rate detector 2 can detect the fluid flowing in the wide portion of the secondary flow path 32.

### <Configuration Example of Fluid Property Value Sensor 1>

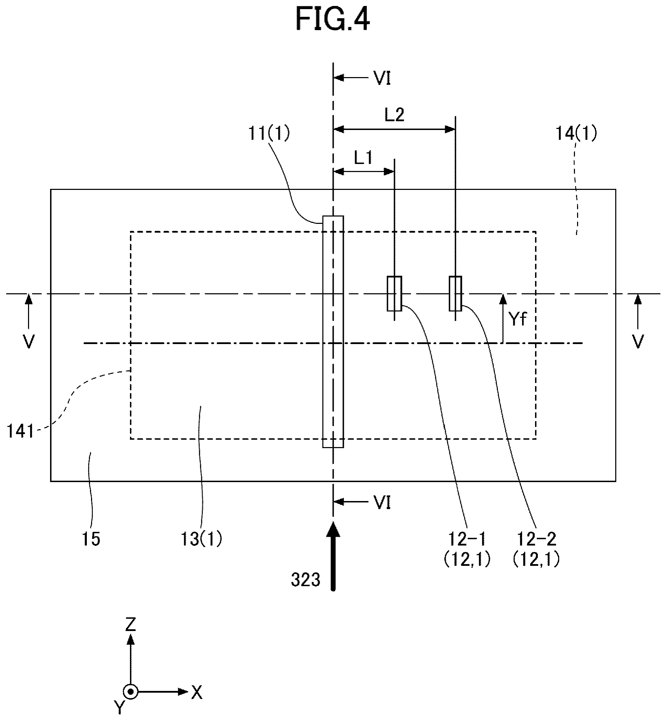

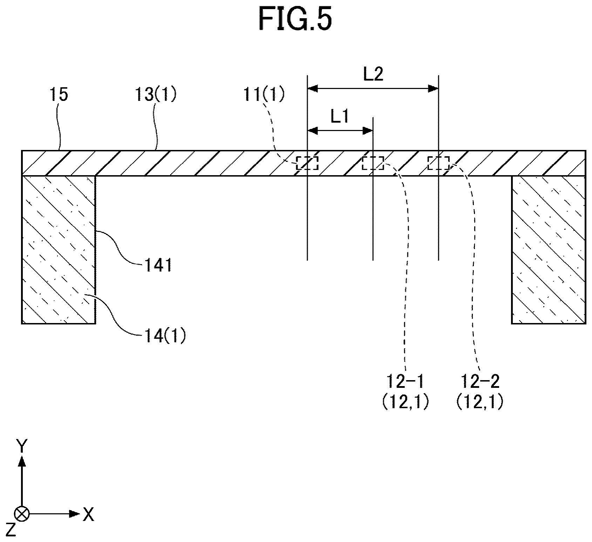

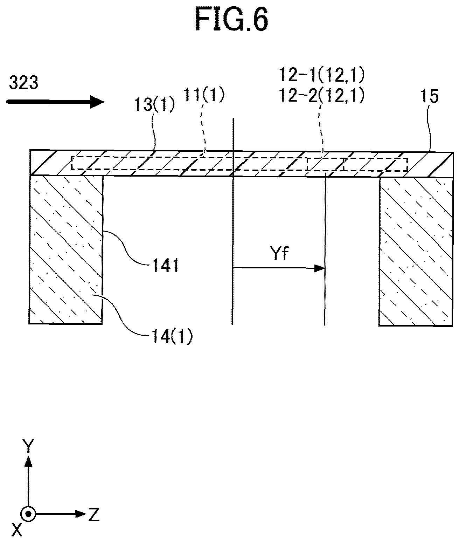

The configuration of the fluid property value sensor 1 will be described with reference to FIG. 4 through 6. FIG. 4 is a top view schematically illustrating an example of the configuration of the fluid property value sensor 1. In FIG. 4, the region IV in FIG. 3 is enlarged. FIG. 5 is a schematic cross-sectional diagram of line V-V in FIG. 4. FIG. 6 is a schematic cross-sectional diagram of line VI-VI in FIG. 4.

As illustrated in FIG. 4 through 6, the fluid property value sensor 1 includes a first heater 11, a plurality of temperature sensors 12, a first membrane 13, and a first support member 14.

The first heater 11 elongated longitudinally in the flow direction 323 (i.e., the Z direction in this case). The first heater 11 is, for example, a heating resistor which generates heat by energization.

In this embodiment, the plurality of temperature sensors 12 are aligned at respective positions relative to the first heater 11 in a direction orthogonal to the longitudinal direction of the first heater 11 (i.e., the X direction in this case). The temperature sensors 12 include any one of a thermistor, a linear resistor, a platinum temperature measuring resistor, a thermocouple (thermocouple), a thermopile (thermopile), or the like. It is preferable to select the same type for all temperature sensors 12 to ensure consistent characteristics. However, since detection can be performed even if the temperature sensors 12 are not of the same type, they do not necessarily have to be of the same type.

The first membrane 13 is an example of a membrane on which the first heater 11 and the plurality of temperature sensors 12 are mounted. At least part of the first heater 11 and the plurality of temperature sensors 12, not all of these components, may be mounted on the first membrane 13. In a first thin film structure 15 provided to close a first opening 141 of the first support member 14, the first membrane 13 coincides with a region above the first opening 141. The first thin film structure 15 is formed by laminating, for example, a plurality of insulating films. The thickness of the first thin film structure 15 is about 0.5 µm to 5.0 µm.

The first support member 14 is an example of a support member supporting the first membrane 13. The first support member 14 is a frame body including the first opening 141 having a substantially rectangular shape in top view, and the frame body has a substantially rectangular outer shape in top view. The first support member 14 includes, for example, silicone. The first thin film structure 15 is fixed on the upper surface of the first support member 14, and the first support member 14 thereby supports the first membrane 13, which is a part of the first thin film structure 15.

In this embodiment, the plurality of temperature sensors 12 include a first temperature sensor 12-1 and a second temperature sensor 12-2. The first temperature sensor 12-1 is arranged apart from the first heater 11 at a first distance L1 in a direction orthogonal to the longitudinal direction of the first heater 11. Herein, the first temperature sensor 12-1 is arranged apart from the first heater 11 in the +X direction. The second temperature sensor 12-2 is arranged apart from the first heater 11 at a second distance L2 in a direction orthogonal to the longitudinal direction of the first heater 11. Herein, the second temperature sensor 12-2 is arranged apart from the first heater 11 in the +X direction. For example, the first distance L1 is the distance between the centers of the first heater 11 and the first temperature sensor 12-1 in the X direction. The second distance L2 is the distance between the centers of the first heater 11 and the second temperature sensor 12-2 in the X direction.

In the present embodiment, the centers of the first temperature sensor 12-1 and the second temperature sensor 12-2 are located downstream of the center of the first heater 11 in the flow direction 323, when viewed in the Z direction. In the example illustrated in FIG. 4, the centers of the first temperature sensor 12-1 and the second temperature sensor 12-2 are separated by a predetermined distance Yf downstream of the center of the first heater 11 in the flow direction 323.

### <Example of Configuration of Flow Rate Detector 2>

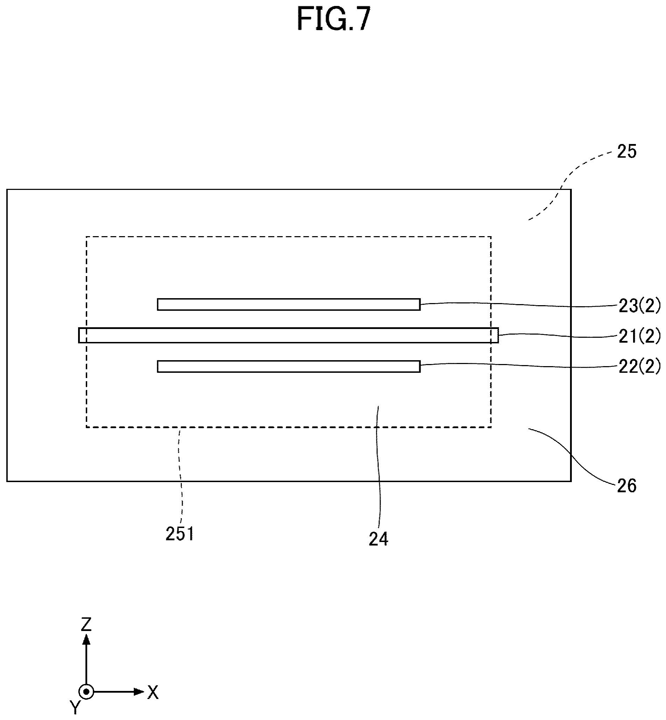

The configuration of the flow rate detector 2 will be described with reference to FIG. 7. FIG. 7 is a top view schematically illustrating an example of the configuration of the flow rate detector 2.

As illustrated in FIG. 7, the flow rate detector 2 includes a second heater 21, a third temperature sensor 22, and a fourth temperature sensor 23.

The second heater 21 is elongated in a direction orthogonal to the flow direction 323 (i.e., the X direction in this case). The second heater 21 is, for example, a heating resistor which generates heat by energization.

The third temperature sensor 22 is arranged upstream of the second heater 21 in the flow direction 323. The fourth temperature sensor 23 is arranged upstream of the second heater 21 in the flow direction 323. Each of the third temperature sensor 22 and the fourth temperature sensor 23 include any one of a thermistor, a linear resistor, a platinum temperature measuring resistor, a thermocouple, a thermopile, or the like. It is preferable to select the same type for the third temperature sensor 22 and the fourth temperature sensor 23 to ensure consistent characteristics. However, since detection can be performed even if the temperature sensors 12 are not of the same type, they do not necessarily have to be of the same type.

The second heater 21, the third temperature sensor 22, and the fourth temperature sensor 23 are mounted on the second membrane 24. At least part of the second heater 21, the third temperature sensor 22, and the fourth temperature sensor 23, not all of these components, may be mounted on the second membrane 24. In a second thin film structure 26 provided to close a second opening 251 of the second support member 25, the second membrane 24 coincides with a region above the second opening 251. The second thin film structure 26 is formed by laminating, for example, a plurality of insulating films. The thickness of the second thin film structure 26 is about 0.5 µm to 5.0 µm.

The second support member 25 supports the second membrane 24. The second support member 25 is a frame body including the second opening 251 having a substantially rectangular shape in top view, and the frame body has a substantially rectangular outer shape in top view. The second support member 25 includes, for example, silicone. With the second thin film structure 26 being fixed to the top surface of the second support member 25, the second membrane 24, which is a part of the second thin film structure 26, is supported by the second support member 25.

### <Example of Hardware Configuration of Flow Sensor 100>

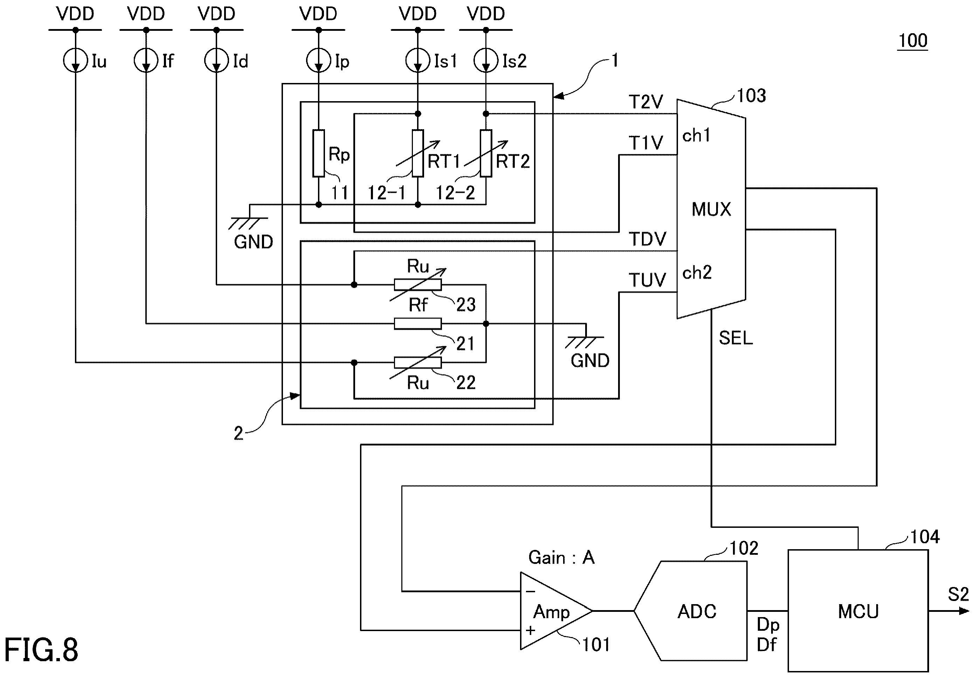

An example of the electrical hardware configuration of the flow sensor 100 will be described with reference to FIG. 8. FIG. 8 is a diagram illustrating an example of the hardware configuration of the flow sensor 100. As illustrated in FIG. 8, the flow sensor 100 includes a current source Ip, a current source Is1, a current source Is2, a current source Iu, a current source If, a current source Id, and an Amp (Amplifier) 101. The flow sensor 100 also includes an ADC (analog-to-digital converter) 102, a MUX (multiplexer) 103, and a MCU (micro controller unit) 104.

In FIG. 8, VDD indicates a power source, and GND indicates a ground. The current source Ip is a current source for driving the first heater 11. The resistor Rp is a heating resistor included in the first heater 11. The current source Is1 is a current source for driving the first temperature sensor 12-1. The resistor RT1 is a temperature measuring resistor included in the first temperature sensor 12-1. The current source Is2 is a current source for driving the second temperature sensor 12-2. The resistor RT2 is a temperature measuring resistor included in the second temperature sensor 12-2.

The current source If is a current source for driving the second heater 21. The resistor Rf is a heating resistor included in the second heater 21. The current source Iu is a current source for driving the third temperature sensor 22. The resistor Ru is a temperature measuring resistor included in the third temperature sensor 22. The current source Id is a current source for driving the fourth temperature sensor 23. The resistor Rd is a temperature measuring resistor included in the fourth temperature sensor 23.

The signal T1V is a signal related to temperature output from the first temperature sensor 12-1. The signal T2V is a signal related to temperature output from the second temperature sensor 12-2. The signal TUV is a signal related to temperature output from the third temperature sensor 22. The signal TDV is a signal related to temperature output from the fourth temperature sensor 23.

The Amp 101 is an amplifying differential amplifier that amplifies the difference voltage between the signal T1V and the signal T2V or the difference voltage between the signal TUV and the signal TDV by a factor of A. The ADC 102 is an analog-to-digital converter that converts an analog voltage signal that is input from the Amp101 into a digital voltage signal and outputs the digital voltage signal. The MUX 103 is a multiplexer that selectively outputs signals based on the signal T1V, the signal T2V, the signal TUV, and the signal TDV according to the selected signal SEL.

The MCU 104 is a microcontroller that executes arithmetic processing based on signals that are input from the ADC 102 and the MUX 103. The MCU 104 corresponds to a second outputter that obtains and outputs flow rate information S2, which is information regarding a flow rate of the fluid, based on information regarding fluid property values obtained from the detection values by the temperature sensors 12 and the detection values obtained by the flow rate detector. The detection value obtained by the first temperature sensor 12-1 is obtained based on the signal T1V. The detection value obtained by the second temperature sensor 12-2 is obtained based on the signal T2V. The detection value by the flow rate detector is obtained based on the signal TUV and the signal TDV.

The flow sensor 100 amplifies the difference voltage signal between the signal T1V and the signal T2V selected by the MUX 103 by the Amp 101, and then inputs the physical property signal Dp converted by the ADC 102 to the MCU 104. Based on the physical property signal Dp, the MCU 104 obtains the physical property value information S1, which is information regarding fluid property values, by calculation.

The flow sensor 100 amplifies the difference voltage signal between the signal TUV and the signal TDV selected by the MUX 103 by the Amp 101, and then inputs the flow rate signal Df converted by the ADC 102 to the MCU 104. The MCU 104 outputs the flow rate information S2 obtained based on the flow rate signal Df and the physical property value information S1 obtained based on the physical property signal Dp. For example, by correcting the flow rate signal Df using the physical property value information S1, the MCU 104 can obtain and output the flow rate information S2 with reduced dependence on fluid property values.

### <Detection Method and Advantageous Effects>

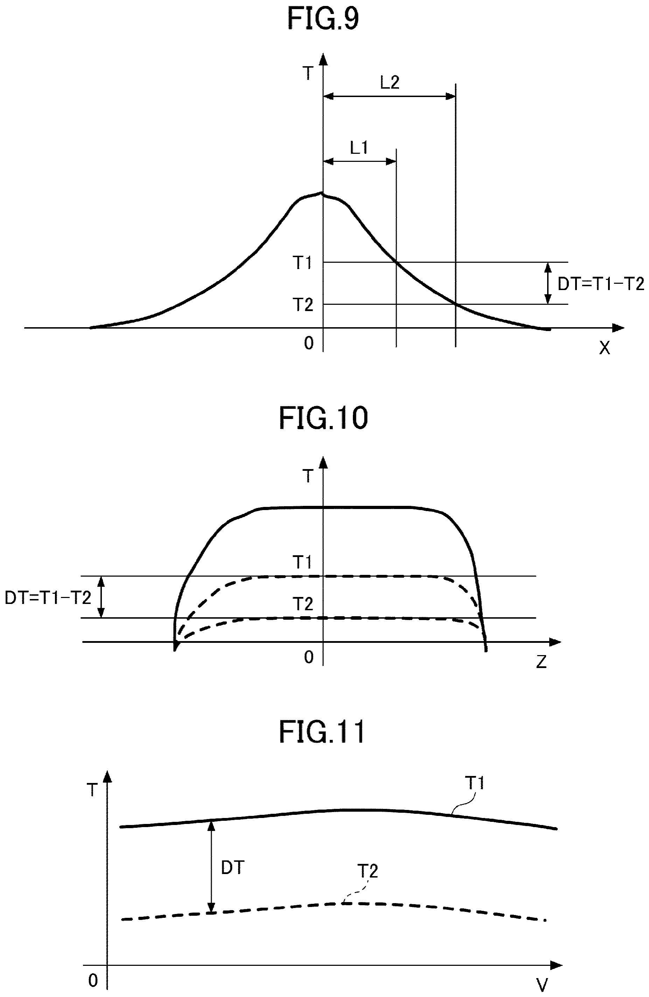

With reference to FIGS. 9 through 14, the detection method and advantageous effects by the fluid property value sensor 1 and the flow sensor 100 will be described.

### (Detection Method)

FIG. 9 is a graph for explaining the temperature distribution viewed from the downstream in the flow direction 323 and an example of the temperature detected by the flow sensor 100. FIG. 10 is a graph for explaining the temperature distribution viewed from the side orthogonal to the flow direction 323 and an example of the temperature detected by the flow sensor 100.

When the first heater 11 illustrated in FIG. 4 is energized, the first heater 11 generates heat and the first membrane 13 around the first heater 11 is heated. As a result, when the vicinity of the first heater 11 is viewed from the downstream in the flow direction 323, the temperature distribution as illustrated in FIG. 9 is obtained. When the vicinity of the first heater 11 is viewed from the side orthogonal to the flow direction 323, the temperature distribution as illustrated in FIG. 10 is obtained.

In FIG. 9, the horizontal axis represents the position in the X direction, and the vertical axis represents the temperature. "0" on the horizontal axis indicates the center position of the first heater 11 in the X direction. In FIG. 10, the horizontal axis represents the position in the Z direction, and the vertical axis represents the temperature. "0" on the horizontal axis indicates the center position of the first heater 11 in the Z direction.

As illustrated in FIG. 9, the first temperature sensor 12-1 outputs a signal T1V related to the temperature T1. The second temperature sensor 12-2 outputs a signal T2V related to the temperature T2. The MCU 104 illustrated in FIG. 8 inputs a physical property signal Dp based on the difference voltage signal between the signal T1V and the signal T2V, and obtains physical property value information S1 by calculation. The physical property value information S1 includes a value substantially proportional to the temperature difference value DT between the temperature T1 and the temperature T2. The physical property value information S1 includes a value that is substantially proportional to the inverse of the thermal conductivity of the fluid or the thermal diffusivity.

### (Reduction of Flow Velocity Dependence of Temperature Detection Value)

FIG. 11 is a graph explaining flow velocity dependence of a temperature detection value. In FIG. 11, the temperature T1 indicates the temperature detected by the first temperature sensor 12-1. The temperature T2 indicates the temperature detected by the second temperature sensor 12-2. The temperatures T1 and T2 differ from each other in accordance with the distance of each of the first temperature sensor 12-1 and the second temperature sensor 12-2 to the first heater 11.

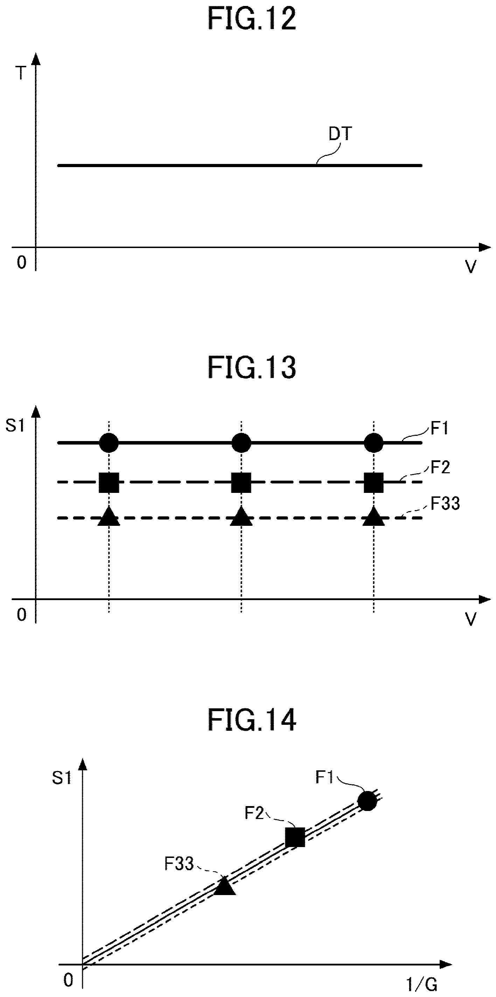

As illustrated in FIG. 11, the temperatures T1 and T2 change according to the flow velocity of the fluid. The changes according to the flow velocity of the fluid have almost the same tendency for the temperatures T1 and T2. Therefore, when the temperature T1 and the temperature T2 are subjected to calculation of difference, the change in accordance with the flow velocity of the fluid is removed, and as illustrated in FIG. 12, the temperature difference value DT that is almost constant regardless of the flow velocity of the fluid is obtained. The flow sensor 100 can obtain physical property value information S1 that is almost proportional to the temperature difference value DT from the temperature difference value DT.

### (Reduction of Dependence of Physical Property Value Information on Flow Velocity)

FIG. 13 is a graph illustrating an example of physical property value information S1 of fluids having different physical property values obtained from the temperature difference value DT. In FIG. 13, the solid line represents the physical property value information S1 of fluid F1. The dashed line represents the physical property value information S1 of fluid F2. The dotted line represents the physical property value information S1 of fluid F3. By using the temperature difference value DT, almost constant physical property value information S1 can be obtained for any of fluids F1 through F3, regardless of the flow velocity.

FIG. 14 is a graph illustrating an example of a relationship between the physical property value information S1 and the physical property values 1/G. The plot marked with a solid circle represents fluid F1, the plot marked with a solid square represents fluid F2, and the plot marked with a solid triangle represents fluid F3. G represents thermal conductivity. As illustrated in FIG. 14, the physical property value information S1 and the physical property value 1/G are approximately proportional. In this embodiment, by reducing dependence of the physical property value information S1 on flow velocity, the fluid property value can be detected with high accuracy based on the physical property value information S1.

### (Reduction of Dependence of Flow Rate Information on Fluid Properties)

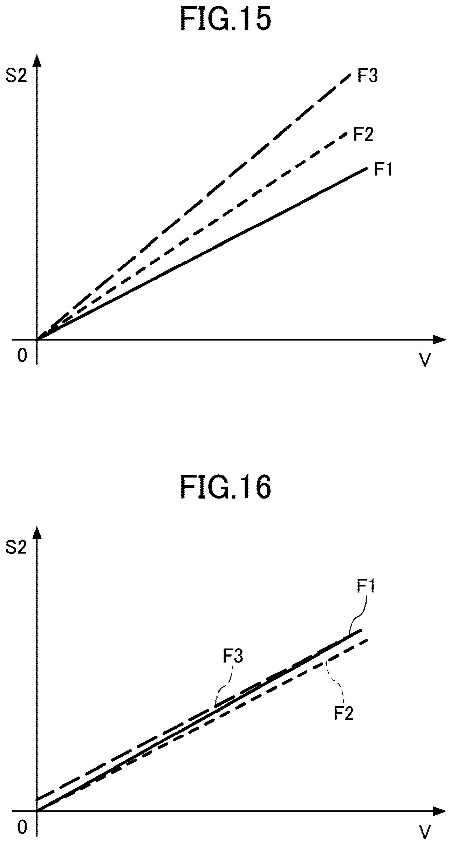

FIG. 15 is a graph illustrating an example of the relationship between a flow rate uncorrected in consideration of the influence of fluid properties and the flow rate information S2. FIG. 16 is a graph illustrating an example of the relationship between a flow rate corrected in consideration of the influence of fluid properties and the flow rate information S2 according to the present embodiment. In FIGS. 15 and 16, the horizontal axis indicates the flow velocity, and the vertical axis indicates the flow rate information S2. The solid line shows the flow rate information S2 of fluid F1, the dashed line shows the flow rate information S2 of fluid F2, and the dotted line shows the flow rate information S2 of fluid F3.

The relationship between the flow rate and the flow rate information S2 is almost the same regardless of the type of fluids F1 through F3. However, as illustrated in FIG. 15, there may be cases where the relationship between the flow rate and the flow rate information S2 varies among fluids F1 through F3 in accordance with the difference in the physical properties of fluids F1 through F3. In other words, the flow rate information S2 may include dependence on fluid properties.

In the example illustrated in FIG. 16, the flow sensor 100 corrects the influence of fluid properties with the fluid property value sensor 1. As a result, the relationship between the flow rate and the flow rate information S2 is almost the same for fluid F1 through F3. Thus, in the present embodiment, dependence of flow rate detection values on fluid properties is reduced, and the flow rate of a fluid can be detected with high accuracy.

In this embodiment, the flow path through which the fluid flows for detecting the flow rate and the flow path through which the fluid flows for detecting fluid property values are not separated, and the flow path through which the fluid flows for detecting fluid property values is subjected to the flow rate detection and the fluid property detection. Therefore, dependence of flow rate detection values on fluid properties can be reduced with a simple structure. Moreover, in the present embodiment, dependence of flow rate detection values on fluid properties can be reduced with simple processing using the difference value of the temperature detection value, without performing complex processing, such as correction of dependence of fluid property detection values on flow velocity using a lookup table. Thus, in the present embodiment, the fluid property value sensor 1, the flow sensor 100, the physical property value detection method, and the fluid detection method, all of which are capable of easily reducing dependence of flow rate detection values on fluid properties, can be provided.

In the present embodiment, the centers of the first temperature sensor 12-1 and the second temperature sensor 12-2 in the longitudinal direction of the first heater 11 are located downstream of the center of the first heater 11 in the flow direction 323. As illustrated in FIG. 10, the temperature distribution is flat and the flat distribution extends over a long distance in the downstream of the center of the first heater 11 in the flow direction 323 as compared to the upstream of the center of the first heater 11 in the flow direction 323. By detecting the temperature at the position where the temperature distribution is flat, the temperature detection value T obtained by the first temperature sensor 12-1 and the second temperature sensor 12-2 can be stabilized and the temperature difference value DT can be stabilized. As a result, in the present embodiment, the detection accuracy of the physical property value information S1 of the fluid can be increased, and the flow rate detection accuracy of the flow sensor 100 can be increased.

### <Hardware Configuration Example of Fluid Property Value Sensor 1>

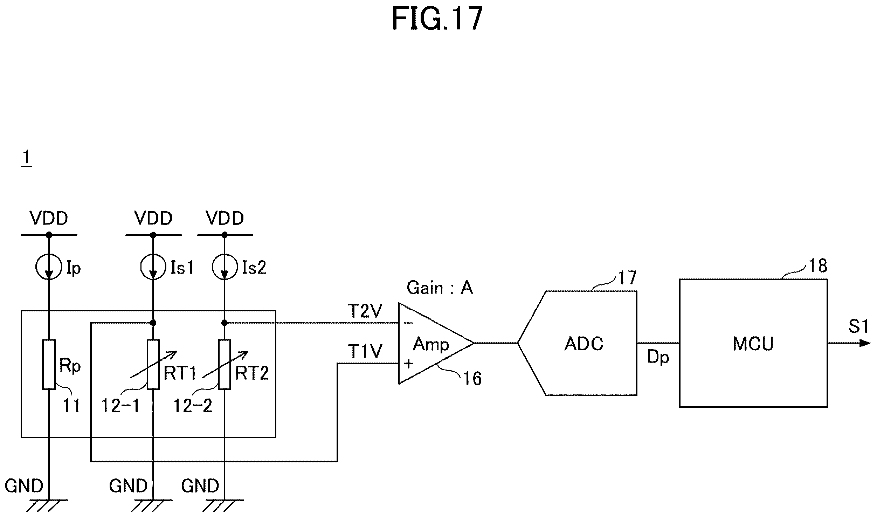

In the present embodiment, the detection value obtained by the fluid property value sensor 1 can also be output to an external device. FIG. 17 is a diagram illustrating an example of a hardware configuration for outputting the detection value obtained by the fluid property value sensor 1 to an external device. Duplicate description of the same components as those of the flow sensor 100 illustrated in FIG. 8 described above will be omitted as appropriate. As illustrated in FIG. 17, the fluid property value sensor 1 includes an Amp 16, an ADC 17, and an MCU 18.

The Amp 16 is an amplification differential amplifier that amplifies the differential voltage between the signals T1V and T2V by a factor of A. The ADC 17 is an analog-to-digital converter that converts an analog voltage signal that is input from the Amp 16 into a digital voltage signal and outputs the digital voltage signal.

The MCU 18 is a microcontroller that executes arithmetic processing based on signals that are input from the ADC 17. The MCU 18 corresponds to the first output unit which outputs the physical property value information S1 obtained based on the signals T1V and T2V. The physical property value information S1 is information related to fluid property values.

The fluid property value sensor 1 amplifies the difference voltage signal between the signal T1V and the signal T2V by the Amp 16, and then inputs the physical property signal Dp converted by the ADC 17 to the MCU 18. The MCU 18 obtains and outputs the physical property value information S1 based on the physical property signal Dp by calculation. Thus, the fluid property value sensor 1 can output the detection value obtained by the fluid property value sensor 1 to an external device.

In this embodiment, the MCU 18 may amplify the signals T1V and T2V by the Amp 16, and output the physical property value information S1 obtained by multiplying the digital voltage signal obtained by analog-to-digital conversion by the ADC 17 by a weighting factor. Specifically, the MCU 18 may obtain and output the physical property value information S1 from the difference value between the value obtained by multiplying the digital voltage signal based on the signal T1V by a weighting factor W1 and the value obtained by multiplying the digital voltage signal based on the signal T2V by a weighting factor W2. The digital voltage signal obtained by multiplying the signals T1V and T2V by the Amp 16 and analog-to-digital conversion by the ADC 17 corresponds to the detection value obtained by the plurality of temperature sensors. Thus, for example, when the contribution ratio to the physical property value information S1 is different among the detection values obtained by the plurality of temperature sensors, the difference in the contribution ratio can be corrected, and the accurate physical property value information S1 can be obtained and output.

### <Modified Examples>

The fluid property value sensor and the flow sensor according to the embodiment can be modified in various ways. Modified examples will be described below. It should be noted that names and reference symbols that are the same as those of the foregoing embodiment indicate the same or the same type of members or components, and the detailed description thereof will be omitted accordingly. This point will also apply to other embodiments and modified examples described hereinafter.

### (First Modified Example)

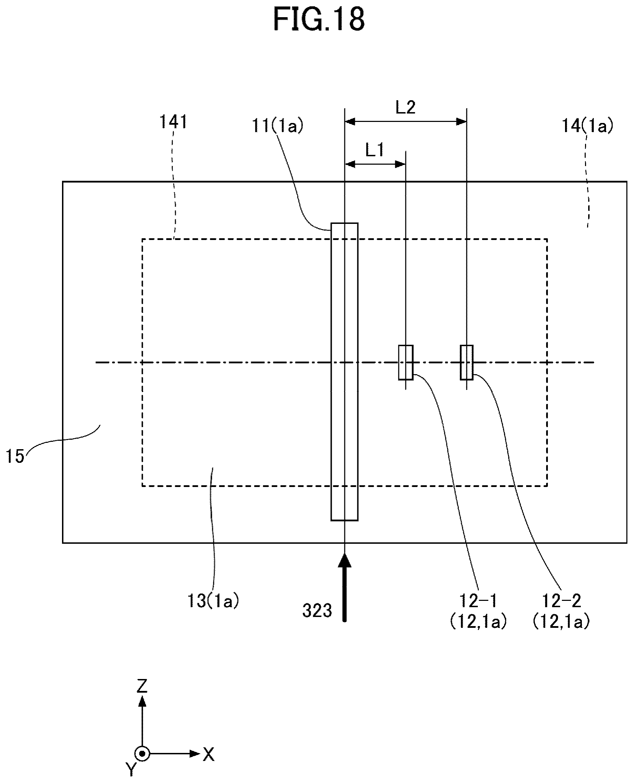

FIG. 18 is a top view schematically illustrating a fluid property value sensor 1a according to a first modified example. This modified example differs from the foregoing embodiment mainly in that a plurality of temperature sensors 12 are arranged at a position substantially equal to the center of the first heater 11 with respect to the flow direction 323 of the fluid. In other words, the main difference from the foregoing embodiment is that the center of each of the plurality of temperature sensors 12 is not located downstream of the center of the first heater 11 in the flow direction 323 of the fluid.

As illustrated in FIG. 18, in the fluid property value sensor 1a, the centers of the first temperature sensor 12-1 and the second temperature sensor 12-2 are arranged in such a manner that the positions of the centers are substantially equal to the position of the center of the first heater 11 with respect to the Z direction. Even in this arrangement, the fluid property value sensor 1a can obtain almost the same effect as the fluid property value sensor 1.

### (Second Modified Example)

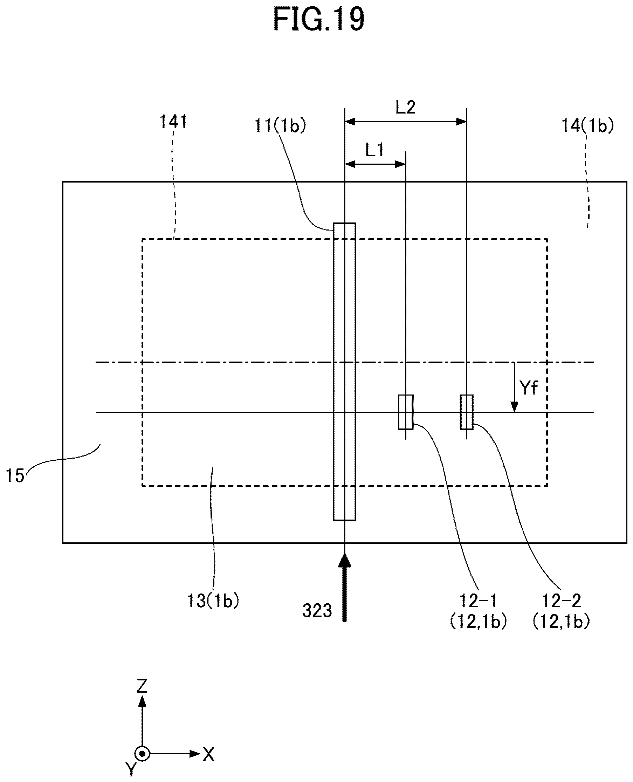

FIG. 19 is a top view schematically illustrating a fluid property value sensor 1b according to a second modified example. In this modified example, the main difference from the foregoing embodiment is that the center of each of the plurality of temperature sensors 12 is located upstream of the center of the first heater 11 in the flow direction 323 of the fluid.

As illustrated in FIG. 19, in the fluid property value sensor 1b, the centers of the first temperature sensor 12-1 and the second temperature sensor 12-2 are arranged in such a manner that they are spaced from the center of the first heater 11 by a predetermined distance Yf upstream in the flow direction 323 (the Z direction). Even in this arrangement, the fluid property value sensor 1b can obtain almost the same effect as the fluid property value sensor 1.

### (Third Modified Example)

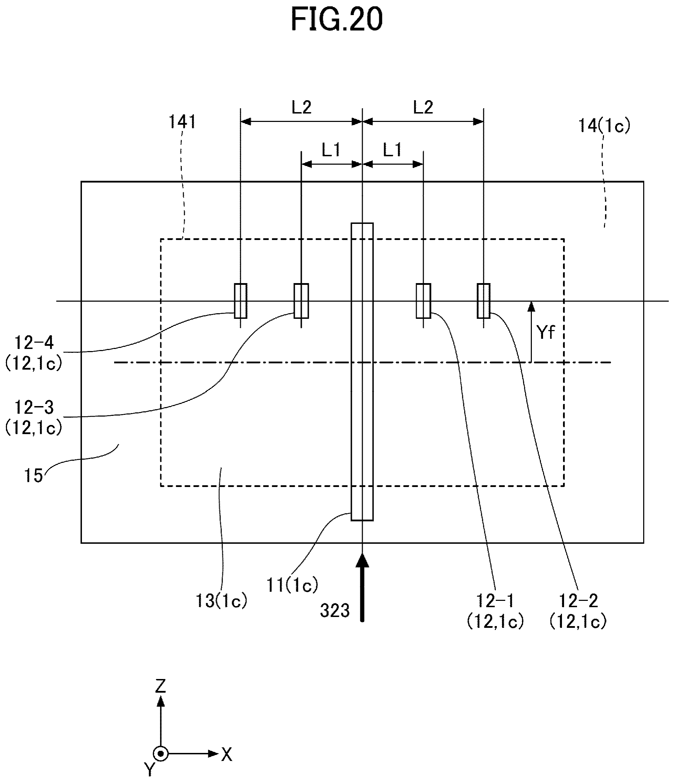

FIG. 20 is a top view schematically illustrating a fluid property value sensor 1c according to a third modified example. This modified example differs from the above-described embodiment mainly in that the fluid property value sensor 1c has four temperature sensors 12 arranged at different distances from the first heater 11 in the direction orthogonal to the longitudinal direction of the first heater 11.

As illustrated in FIG. 20, the fluid property value sensor 1c has four temperature sensors 12. The four temperature sensors 12 include a first temperature sensor 12-1, a second temperature sensor 12-2, a fifth temperature sensor 12-3, and a sixth temperature sensor 12-4.

The fifth temperature sensor 12-3 is arranged at a first distance L1 from the first heater 11 in a direction orthogonal to the longitudinal direction of the first heater 11. Herein, the fifth temperature sensor 12-3 is arranged at the first distance L1 from the first heater 11 in the -X direction. The sixth temperature sensor 12-4 is arranged at a second distance L2 from the first heater 11 in a direction orthogonal to the longitudinal direction of the first heater 11. Herein, the sixth temperature sensor 12-4 is arranged at the second distance L2 from the first heater 11 in the -X direction. For example, the first distance L1 is the distance between the centers of the first heater 11 and the fifth temperature sensor 12-3 in the X direction. The second distance L2 is the distance between the centers of the first heater 11 and the sixth temperature sensor 12-4 in the X direction.

In the present embodiment, when viewed in the flow direction 323 of the fluid, the centers of the fifth temperature sensor 12-3 and the sixth temperature sensor 12-4 are located downstream of the center of the first heater 11 in the flow direction 323. In the example illustrated in FIG. 20, the centers of the fifth temperature sensor 12-3 and the sixth temperature sensor 12-4 are separated by a predetermined distance Yf downstream of the center of the first heater 11 in the flow direction 323.

Herein, the detection value obtained by the first temperature sensor 12-1 is T1, the detection value obtained by the second temperature sensor 12-2 is T2, the detection value obtained by the fifth temperature sensor 12-3 is T3, and the detection value obtained by the sixth temperature sensor 12-4 is T4. The MCU 104 illustrated in FIG. 8 or the MCU 18 illustrated in FIG. 17 calculates the temperature difference value DT by the following equation: DT = (T1 + T3) - (T2 + T4). As a result, the signal intensity in the temperature difference value DT is approximately doubled. By using the temperature difference value DT, the signal-to-noise (S/N) ratio of the physical property value information S1 and the flow rate information S2 can be improved in this modified example.

### (Fourth Modified Example)

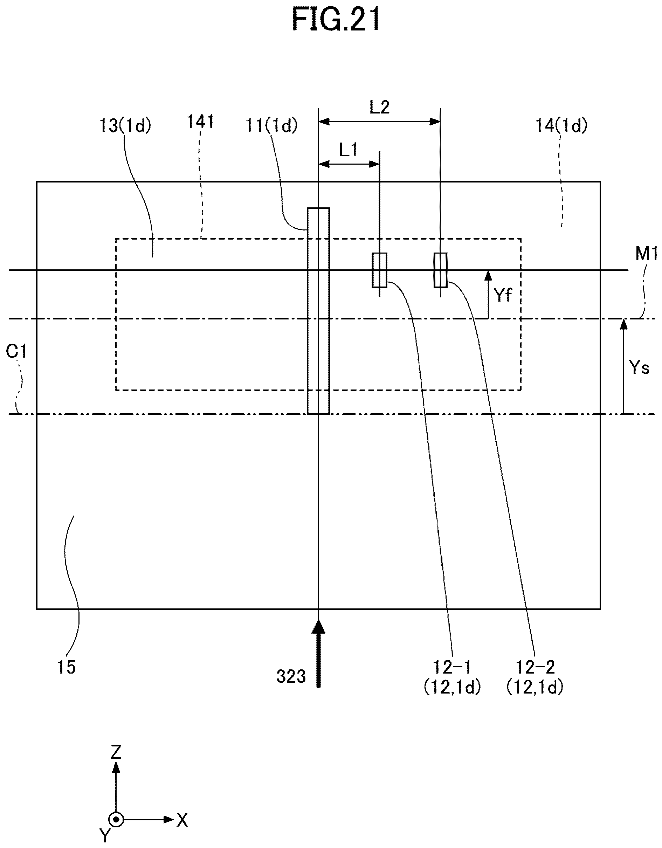

FIG. 21 is a top view schematically illustrating a fluid property value sensor 1d according to a fourth modified example. In this modified example, the main difference from the foregoing embodiment is that the centers of the first heater 11, the plurality of temperature sensors 12, and the first membrane 13 are located downstream of the center of the first support member 14 in the flow direction 323 of the fluid.

In FIG. 21, the first heater 11, the first temperature sensor 12-1, and the second temperature sensor 12-2 are mounted on the first membrane 13. The first support member 14 supports the first membrane 13. The centers of the first heater 11, the first temperature sensor 12-1, the second temperature sensor 12-2, and the first membrane 13 in the flow direction 323 of the fluid are located on the axis M1. The center of the first support member 14 in the flow direction 323 of the fluid is located on the axis C1. The axis M1 is located downstream of the axis C1 in the flow direction 323 of the fluid. For example, the axis M1 is located downstream of the axis C1 by a distance Ys.

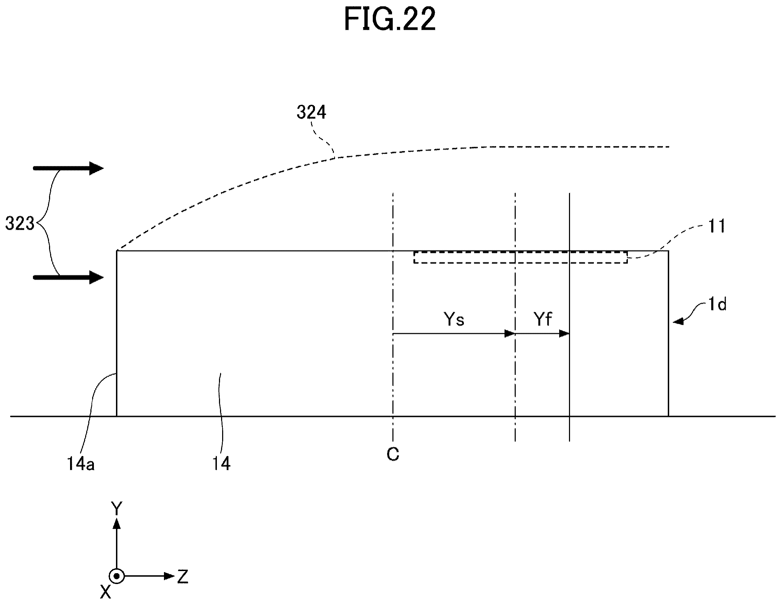

FIG. 22 illustrates the operation of the fluid property value sensor 1d. FIG. 22 illustrates the fluid property value sensor 1d viewed from the side on the +X side. In the case of fluid flowing in the flow direction 323, the fluid may hit the end 14a of the first support member 14 of the fluid property value sensor 1d, and the flow of the fluid may be disturbed, thereby causing the flow velocity to fluctuate.

The velocity boundary layer 324 in FIG. 22 schematically shows how the flow velocity changes. As illustrated by the velocity boundary layer 324, the flow velocity of the fluid flowing above the fluid property value sensor 1d changes near the end 14a. As the fluid moves away from the end 14a in the flow direction 323, the flow velocity of the fluid stabilizes and eventually becomes almost uniform. In the flow direction 323, the flow velocity stabilizes further downstream of the end 14a. Therefore, by arranging the first heater 11, the plurality of temperature sensors 12, and the first membrane 13 in such a manner that their centers are located as far downstream as possible from the center of the first support member 14, the fluid property value sensor 1d can detect a fluid property value while suppressing the flow velocity dependence of the fluid. Thus, in this modified example, the detection accuracy of the fluid property value sensor 1d can be improved.

### (Fifth Modified Example)

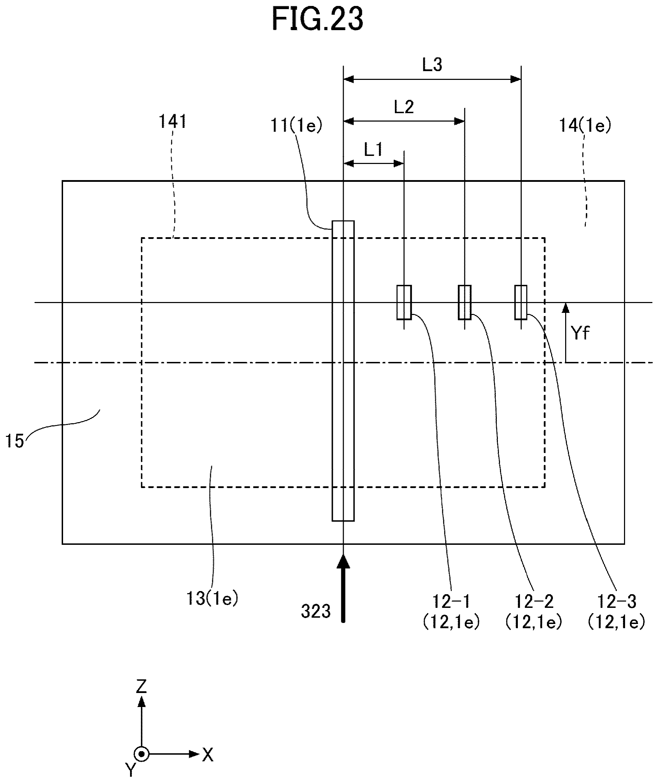

FIG. 23 is a top view schematically illustrating a fluid property value sensor 1e according to a fifth modified example. This modified example differs from the above-described embodiment mainly in that the fluid property value sensor 1e has three temperature sensors 12 arranged at different distances from the first heater 11 in the direction orthogonal to the longitudinal direction of the first heater 11.

As illustrated in FIG. 23, the fluid property value sensor 1e has a seventh temperature sensor 12-5. The seventh temperature sensor 12-5 is arranged at a third distance L3 from the first heater 11 in a direction orthogonal to the longitudinal direction of the first heater 11. For example, the third distance L3 is the distance between the centers of the first heater 11 and the seventh temperature sensor 12-5 in the X direction.

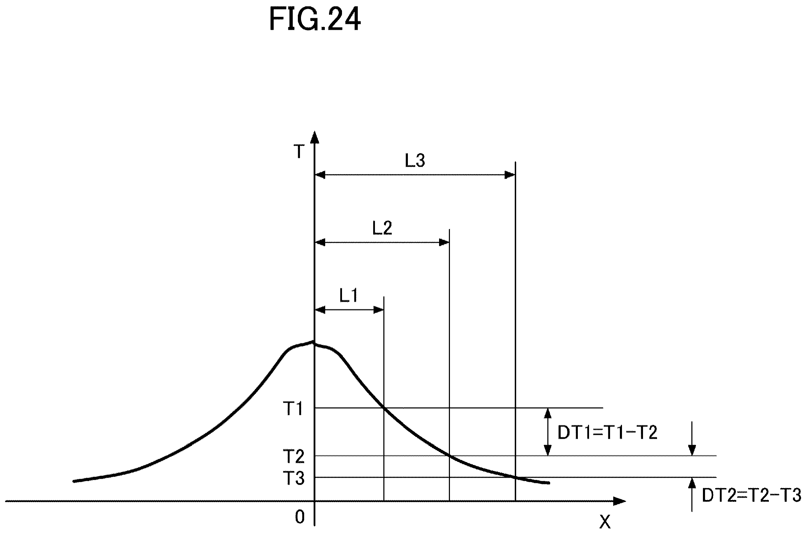

FIG. 24 is a graph illustrating a temperature distribution viewed from downstream in a flow direction in the arrangement illustrated in FIG. 23 and an example of a detected temperature. The graph of FIG. 24 is the same as that of FIG. 9 described above.

The first temperature sensor 12-1 illustrated in FIG. 23 outputs a signal T1V related to the temperature T1. The second temperature sensor 12-2 outputs a signal T2V related to the temperature T2. The seventh temperature sensor 12-5 outputs a signal T3V related to the temperature T3.

The MCU 104 illustrated in FIG. 8 or the MCU 18 illustrated in FIG. 17 can obtain the physical property value information S1 of the fluid based on a temperature difference value DT1 between the temperatures T1 and T2 and a temperature difference value DT2 between the temperatures T2 and T3. In this modified example, the fluid property value can be detected with high accuracy because the detection values obtained by the three temperature sensors 12 are hardly affected by the flow velocity.

### (Sixth Modified Example)

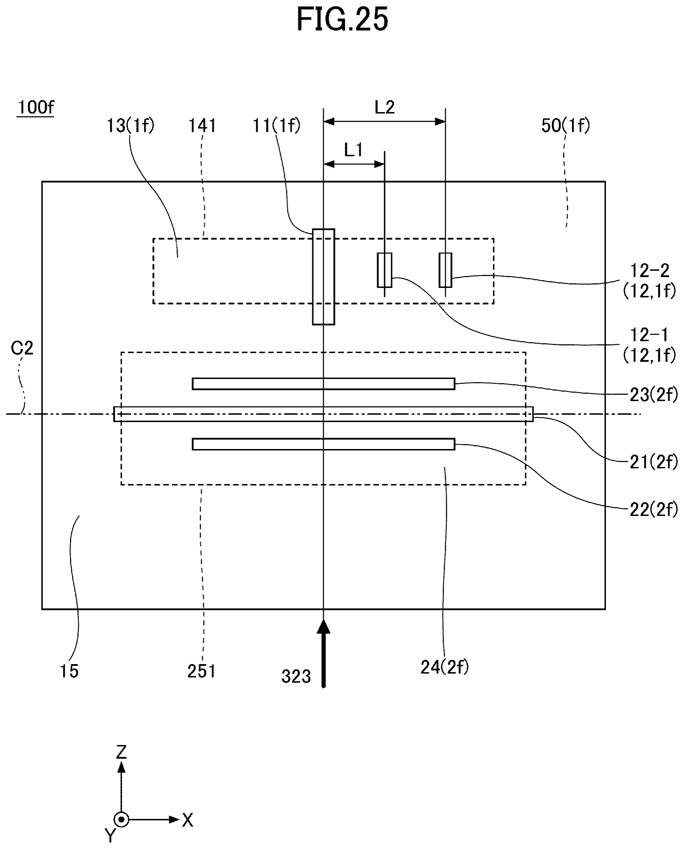

FIG. 25 is a top view schematically illustrating a flow sensor 100f according to a sixth modified example. In this modified example, the main difference from the foregoing embodiment is that the fluid property value sensor 1 and the flow rate detector 2 are supported by the same support member. In this modified example, the main difference from the foregoing embodiment is that the area of the first membrane 13 in the fluid property value sensor 1f is smaller than the area of the second membrane 24 in the flow rate detector 2f.

As illustrated in FIG. 25, the flow sensor 100f includes a fluid property value sensor 1f, a flow rate detector 2f, and a third support member 50. The fluid property value sensor 1f is arranged downstream of the flow rate detector 2f in the flow direction 323 of the fluid. The flow rate detector 2f is arranged in such a manner that the center of the second heater 21 is located on the central axis C2 of the third support member 50 in the flow direction 323 of the fluid.

In this modified example, the third support member 50 supports the fluid property value sensor 1f and the flow rate detector 2f. The third support member 50 corresponds to "a same support member" by which the fluid property value sensor 1f and the flow rate detector 2f are supported. In top view, the third support member 50 includes a substantially rectangular first opening 141 and a substantially rectangular second opening 251. The third support member 50 includes, for example, silicone. The thin film structure 51 is fixed on the upper surface of the third support member 50, and the third support member 50 thereby supports the first membrane 13 and the second membrane 24, each of which is a part of the thin film structure 51. The third support member 50 supports the fluid property value sensor 1f by the first membrane 13. The third support member 50 supports the flow rate detector 2f by the second membrane 24.

In this modified example, the area of the first membrane 13 is smaller than the area of the second membrane 24. The larger the area of the second membrane 24, the higher the signal-to-noise ratio for flow rate detection, and the detection accuracy is therefore improved. On the other hand, the smaller the area of the first membrane 13, the lower the flow velocity dependence in fluid property value detection, and the detection accuracy is therefore improved. Therefore, in this modified example, by making the area of the first membrane 13 smaller than the area of the second membrane 24, it is possible to increase the detection accuracy of each of the flow rate and the fluid property value in comparison to the case where the area of the first membrane 13 and the area of the second membrane 24 are the same, or the area of the first membrane 13 is larger than the area of the second membrane 24.

Although the preferred embodiment of the present invention has been described in detail above, the present invention is not limited to the above-described embodiment, and various modifications and substitutions may be made to the above-described embodiment without departing from the scope of the present invention.

Aspects of the present invention are, for example, as follows.
<1> A physical property value sensor, including: a first heater elongated longitudinally in a flow direction of a fluid; and a plurality of temperature sensors aligned at respective positions with respect to the first heater in a direction orthogonal to a longitudinal direction of the first heater.
<2> The physical property value sensor described in <1>, wherein the plurality of temperature sensors include a first temperature sensor arranged at a first distance from the first heater in the direction orthogonal to the longitudinal direction of the first heater; and a second temperature sensor arranged at a second distance from the first heater in the direction orthogonal to the longitudinal direction of the first heater.
<3> The physical property value sensor described in <1> or <2>, wherein a center of each of the plurality of temperature sensors is located downstream of a center of the first heater in the flow direction of the fluid, when viewed in the longitudinal direction of the first heater.
<4> The physical property value sensor described in any one of <1> to <3>, further including: a membrane on which the first heater and the plurality of temperature sensors are mounted; and a support member configured to support the membrane, wherein a center of each of the first heater, the plurality of temperature sensors, and the membrane is located downstream of a center of the support member in the flow direction of the fluid.
<5> The physical property value sensor described in any one of <1> to <4>, further including: a first outputter configured to output information regarding a fluid property value obtained based on detection values obtained by the plurality of temperature sensors.
<6> The physical property value sensor described in any one of <1> to <5>, wherein the first outputter is configured to output information regarding the fluid property value obtained based on a value calculated by multiplying each of the detection values obtained by the plurality of temperature sensors by a weighting factor.
<7> A flow sensor, including: the physical property value sensor described in any one of <1> to <6>; and a flow rate detector configured to detect a flow rate of a fluid.
<8> The flow sensor described in <7>, wherein the flow rate detector includes a second heater elongated longitudinally in a direction orthogonal to a flow direction of the fluid; a third temperature sensor arranged upstream of the second heater in the flow direction of the fluid; and a fourth temperature sensor arranged downstream of the second heater in the flow direction of the fluid.
<9> The flow sensor described in <7> or <8>, wherein the physical property value sensor and the flow rate detector are supported by a same support member.
<10> The flow sensor described in <8>, wherein the physical property value sensor includes a first membrane on which the first heater and the plurality of temperature sensors are mounted, the flow rate detector includes a second membrane on which the second heater, the third temperature sensor, and the fourth temperature sensor are mounted, and an area of the first membrane is smaller than an area of the second membrane.
<11> The flow sensor described in any one of <7> to <10>, further including: a second outputter configured to obtain and output information regarding the flow rate of the fluid based on information regarding a fluid property value obtained from detection values obtained by the plurality of temperature sensors and the detection value obtained by the flow rate detector.
<12> A method for detecting a physical property value by a physical property value sensor, the physical property value sensor including a first heater elongated longitudinally in a flow direction of a fluid, and a plurality of temperature sensors aligned at respective positions with respect to the first heater in a direction orthogonal to a longitudinal direction of the first heater, the plurality of temperature sensors including a first temperature sensor arranged at a first distance from the first heater in the direction orthogonal to the longitudinal direction of the first heater; and a second temperature sensor arranged at a second distance from the second heater in the direction orthogonal to the longitudinal direction of the first heater, the method including: outputting from a first outputter, by the physical property value sensor, information regarding a fluid property value obtained based on detection values obtained by the plurality of temperature sensors.
<13> A fluid detection method by a flow sensor including a physical property value sensor and a flow rate detector configured to detect a flow rate of a fluid, the physical property value sensor including a first heater elongated longitudinally in a flow direction of the fluid; and a plurality of temperature sensors aligned at respective positions with respect to the first heater in a direction orthogonal to a longitudinal direction of the first heater, the method including: the flow sensor causing a first outputter to output information regarding a fluid property value obtained based on detection values obtained by the plurality of temperature sensors; and the flow sensor causing a second outputter to output information regarding a flow rate of the fluid based on information regarding a fluid property value that is output from the first outputter and a detection value obtained by the flow rate detector.

This application claims priority to Japanese Patent Application No. 2023-051492 filed with the Japan Patent Office on March 28, 2023, the entire contents of which are incorporated herein by reference.

### REFERENCE SIGNS LIST

- 1, 1a, 1b, 1c, 1d, 1e, 1f: Fluid property value sensor
- 11: First heater
- 12: Temperature sensor
- 12-1: First temperature sensor
- 12-2: Second temperature sensor
- 12-3: Fifth temperature sensor
- 12-4: Sixth temperature sensor
- 13: First membrane
- 14: First support member
- 14a: End
- 141: First opening
- 15: First thin film structure
- 16: Amp
- 17: ADC
- 18: MCU
- 2: Flow rate detector
- 21: Second heater
- 22: Third temperature sensor
- 23: Fourth temperature sensor
- 24: Second membrane
- 25: Second support member
- 251: Second opening
- 26: Second thin film structure
- 3: Housing
- 30: Mainstream direction
- 31: Primary flow path
- 311: Inlet opening
- 312: Outlet opening
- 32: Secondary flow path
- 321: Supply port
- 322: Outlet port
- 323: Flow direction
- 324: Velocity boundary layer
- 4: Substrate
- 50: Third support member
- 100, 100f: Flow sensor
- 101: Amplifier (Amp)
- 102: ADC
- 103: MUX
- 104: MCU
- C1: Axis
- C2: Central Axis
- DT, DT1, DT2: Temperature difference
- F1, F2, F3: Fluid
- L1: First distance
- L2: Second distance
- L3: Third distance
- M1: Axis
- S1: Physical property value information
- S2: Flow rate information
- T1, T2, T3, T4: Temperature
- Yf: Predetermined distance
- Ys: Distance

## Claims

1. A physical property value sensor, comprising:
a first heater elongated longitudinally in a flow direction of a fluid; and
a plurality of temperature sensors aligned at respective positions with respect to the first heater in a direction orthogonal to a longitudinal direction of the first heater.

2. The physical property value sensor according to claim 1, wherein
the plurality of temperature sensors include
a first temperature sensor arranged at a first distance from the first heater in the direction orthogonal to the longitudinal direction of the first heater; and
a second temperature sensor arranged at a second distance from the first heater in the direction orthogonal to the longitudinal direction of the first heater.

3. The physical property value sensor according to claim 1, wherein
a center of each of the plurality of temperature sensors is located downstream of a center of the first heater in the flow direction of the fluid, when viewed in the longitudinal direction of the first heater.

4. The physical property value sensor according to claim 1, further comprising:
a membrane on which the first heater and the plurality of temperature sensors are mounted; and
a support member configured to support the membrane, wherein
a center of each of the first heater, the plurality of temperature sensors, and the membrane is located downstream of a center of the support member in the flow direction of the fluid.

5. The physical property value sensor according to claim 1, further comprising:
a first outputter configured to output information regarding a fluid property value obtained based on detection values obtained by the plurality of temperature sensors.

6. The physical property value sensor according to claim 5, wherein
the first outputter is configured to output information regarding the fluid property value obtained based on a value calculated by multiplying each of the detection values obtained by the plurality of temperature sensors by a weighting factor.

7. A flow sensor, comprising:
the physical property value sensor according to any one of claims 1 to 6; and
a flow rate detector configured to detect a flow rate of a fluid.

8. The flow sensor according to claim 7, wherein
the flow rate detector includes
a second heater elongated longitudinally in a direction orthogonal to a flow direction of the fluid;
a third temperature sensor arranged upstream of the second heater in the flow direction of the fluid; and
a fourth temperature sensor arranged downstream of the second heater in the flow direction of the fluid.

9. The flow sensor according to claim 7, wherein
the physical property value sensor and the flow rate detector are supported by a same support member.

10. The flow sensor according to claim 8, wherein
the physical property value sensor includes a first membrane on which the first heater and the plurality of temperature sensors are mounted,
the flow rate detector includes a second membrane on which the second heater, the third temperature sensor, and the fourth temperature sensor are mounted, and
an area of the first membrane is smaller than an area of the second membrane.

11. The flow sensor according to claim 7, further comprising:
a second outputter configured to obtain and output information regarding the flow rate of the fluid based on information regarding a fluid property value obtained from detection values obtained by the plurality of temperature sensors and the detection value obtained by the flow rate detector.

12. A method for detecting a physical property value by a physical property value sensor, the physical property value sensor including a first heater elongated longitudinally in a flow direction of a fluid, and a plurality of temperature sensors aligned at respective positions with respect to the first heater in a direction orthogonal to a longitudinal direction of the first heater, the plurality of temperature sensors including
a first temperature sensor arranged at a first distance from the first heater in the direction orthogonal to the longitudinal direction of the first heater; and
a second temperature sensor arranged at a second distance from the second heater in the direction orthogonal to the longitudinal direction of the first heater, the method comprising:
outputting from a first outputter, by the physical property value sensor, information regarding a fluid property value obtained based on detection values obtained by the plurality of temperature sensors.

13. A fluid detection method by a flow sensor including a physical property value sensor and a flow rate detector configured to detect a flow rate of a fluid, the physical property value sensor including
a first heater elongated longitudinally in a flow direction of the fluid; and
a plurality of temperature sensors aligned at respective positions with respect to the first heater in a direction orthogonal to a longitudinal direction of the first heater, the method comprising:
the flow sensor causing a first outputter to output information regarding a fluid property value obtained based on detection values obtained by the plurality of temperature sensors; and
the flow sensor causing a second outputter to output information regarding a flow rate of the fluid based on information regarding a fluid property value that is output from the first outputter and a detection value obtained by the flow rate detector.
